# EUROPÄISCHE PATENTANMELDUNG

(11) **EP 0 630 713 A1**
(43) Veröffentlichungstag der Anmeldung: **28.12.1994**
(21) Anmeldenummer: 94107661.4
(22) Anmeldetag: 18.05.1994
(51) Int. Cl.: B22F 7/06, B21B 27/03

(54) **Verbundkörper, bestehend aus Werkstoffen unterschiedlicher thermischer und mechanischer Eigenschaften**

(30) Priorität: 25.06.1993 DE 4321143
(71) Anmelder: SAAR-HARTMETALL UND WERKZEUGE GMBH, D-66333 Völklingen (DE)
(72) Erfinder: Altmeyer, Werner, Dr., D-66333 Völklingen (DE); Schuler, Dietmar, Dr., D-66740 Saarlouis (DE); Kiefer, Franz, Dr., D-66333 Völklingen (DE)
(74) Vertreter: Vièl, Georg, Dipl.-Ing.

(57) **Zusammenfassung**

Die Erfindung bezieht sich auf einen Verbundkörper, der aus Werkstoffen mit unterschiedlichen thermischen und mechanischen Eigenschaften besteht.

Der Verbundkörper (1) weist im oberen Bereich einen verschleißfesten Hartmetallkörper (2) auf, der in eine Zone einer duktilen Legierung mit kleinem thermischen Ausdehnungskoeffizienten so eingebettet ist, daß nur sein oberer Teil herausragt. Die duktile Zone (3) ist von einem Grundkörper (4) ummantelt, der bevorzugt aus einem hochfesten Vergütungsstahl besteht. Durch heißisostatisches Pressen werden Hartmetallkörper (2), duktile Zone (3) und Grundkörper (4) zu dem erfindungsgemäßen Verbundkörper (1) zusammengefügt.

Die mit der Erfindung erzielten Vorteile bestehen insbesondere darin, daß ein spannungsarmer Verbundkörper (1) geschaffen wurde, der thermische Spannungen im Verbundsystem niedrig hält bzw. abbaut, eine verbesserte Kraftübertragung ermöglicht und eine wesentlich niedrigere Bruchempfindlichkeit aufweist als vergleichbare am Markt befindliche Körper.

## Beschreibung

Die Erfindung betrifft einen Verbundkörper, der aus Werkstoffen mit unterschiedlichen thermischen und mechanischen Eigenschaften besteht.

Verbundkörper haben aufgrund der Kombination von Werkstoffen mit speziellen unterschiedlichen Eigenschaften gegenüber den aus einem Werkstoff bestehenden Werkzeugen den Vorteil, daß sie gezielter auf ihren Einsatz ausgebildet sind und in der Regel höhere Leistungen erbringen. Hartmetallwalzringe beispielsweise, die in den letzten Jahren eine große Bedeutung für die Heißumformung von Stahl gewonnen haben, bestehen nur aus einem Werkstoff: Hartmetall. Die relativ niedrige Zähigkeit dieses hochverschleißfesten Werkstoffes schränkt jedoch den weitergehenden Einsatz derartiger Walzringe bezüglich der Drehmomentübertragung und der Bruchgefahr stark ein.

Deshalb hat man Hartmetallringe mit Stahlgrundkörpern kombiniert, beispielsweise in geklemmter Ausführung. Bei großer Beanspruchung ist diese Technik allerdings sehr aufwendig, weil die Klemmtechnik zahlreiche Schraubverbindungen erfordert.

Bei der bekannten Kombination Hartmetall-Stahl, die durch Löten von Hartmetall und Stahl, beispielsweise bei Kleinteilen, oder durch heißisostatisches Pressen von Hartmetall und Stahl, zusammengefügt wird, ist die Bruchgefahr gemindert, es treten jedoch Schwierigkeiten infolge der unterschiedlichen thermischen Ausdehnungskoeffizienten dieser beiden Werkstoffe (Hartmetall: 4 bis 8 x 10 ⁻⁶/°K, Stahl: 12 x 10 ⁻⁶/°K) auf und verhindern einen erweiterten Einsatz.

Es ist auch ein Verfahren bekannt, wobei Hartmetallringe teilweise mit einem duktilen Stahl umgossen werden. Damit ist zwar ein erweiterter Einsatz von Hartmetall zum Walzen von Stahl infolge verbesserter konstruktiver Möglichkeiten für die Walzkraftübertragung und einer verringerten Bruchempfindlichkeit des Hartmetalls möglich. Als nachteilig erweist sich jedoch, daß beim Angießen des Hartmetallrings mit flüssigem Stahl Thermoschockrisse und unerwünschte Diffusionsbereiche mit spröden Phasen (η -Phase) entstehen können und daß beim Abkühlen unterhalb der Spannungsarm-Glühtemperatur aufgrund der unterschiedlichen thermischen Ausdehnungskoeffizienten von Hartmetall und Stahl thermischen Spannungen im Verbund auftreten können, wodurch die Kombination auf hochbindemittelhaltige ( > 20 %) Hartmetalle beschränkt wird; außerdem läßt sich das Verhältnis Masse Stahl zu Masse Hartmetall nicht beliebig verändern. Ein weiterer Nachteil besteht darin, daß das Verbundteil im Bereich der Bohrung eine oft nicht ausreichende Festigkeit besitzt.

Der Erfindung liegt deshalb die Aufgabe zugrunde, einen Verbundkörper, bestehend aus Werkstoffen mit unterschiedlichen thermischen und mechanischen Einschaften zu entwickeln, die so aufeinander abgestimmt sind, daß der Verbund sehr spannungsarm ausgebildet ist und die bei den Einsatztemperaturen infolge unterschiedlicher thermischer Ausdehnungsspannungen niedrig gehalten oder abgebaut werden, so daß eine verbesserte Kraftübertragung ermöglicht und die Bruchempfindlichkeit des Verbundkörpers stark herabgesetzt wird.

Diese Aufgabe wird erfindungsgemäß dadurch gelöst, daß der Verbundkörper einen aus Stahl bestehenden Grundkörper und einen hochverschleißfesten Hartmetallkörper aufweist, daß sich zwischen dem Grundkörper und dem Hartmetallkörper Pulver eine duktilen Legierung mit kleinem thermischen Ausdehnungskoeffizient befindet und daß durch heißisostatisches Pressen sowohl das Pulver konsolidiert sowie Grundkörper, konsolidiertes Pulver und Hartmetallkörper diffusionsverschweißt sind.

Erfindungsgemäß ist vorgesehen, daß als Legierung für das Pulver hochlegierte austenitische Nickelstähle vorgesehen sind.

Im Rahmen der Erfindung liegt es auch, daß als Legierung für das Pulver eine austenitische Eisen-Nickel-Legierung mit 36 % Nickel vorgesehen ist.

Eine bevorzugte Anwendung der Erfindung besteht darin, daß der Verbundkörper als Walzring ausgebildet ist.

Als vorteilhaft erweist sich, daß die Festigkeit des Grundkörpers durch gesteuerte Abkühlung nach dem heißisostatischen Pressen gezielt einstellbar ist.

Die mit der Erfindung erzielten Vorteile bestehen insbesondere darin, daß ein spannungsarmer Verbundkörper geschaffen wurde, der thermische Spannungen im Verbundsystem niedrig hält bzw. abbaut, eine verbesserte Kraftübertragung ermöglicht und eine wesentlich niedrigere Bruchempfindlichkeit aufweist als vergleichbare, am Markt befindliche Körper.

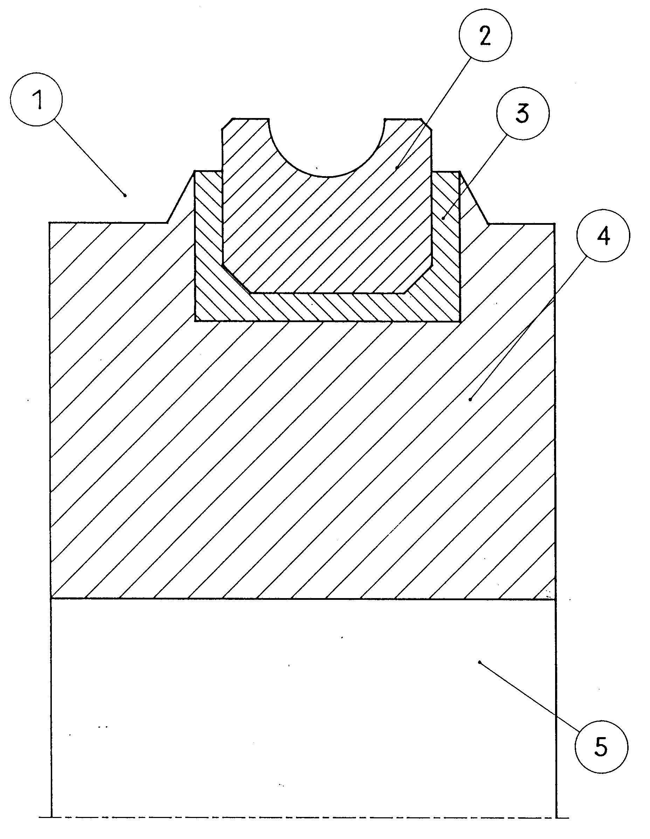

Ein Ausführungsbeispiel der Erfindung ist in der Zeichnung dargestellt und wird nachfolgend näher beschrieben.

Die einzige Figur zeigt einen Schnitt (schematisch) durch einen erfindungsgemäß aus drei unterschiedlichen Werkstoffen bestehenden Verbundkörper 1, der in dem dargestellten Ausführungsbeispiel ein Walzring zum Walzen von Draht ist. Der Verbundkörper 1 weist im oberen Bereich einen hochverschleißfesten Hartmetallkürper 2 auf, der in diesem Beispiel als Ring ausgebildet und in eine duktile Zone 3 eingebettet ist, die ihrerseits von einem Grundkörper 4 ummantelt ist. Bei anderen Verbundkörpern ist es nach der Erfindung möglich, daß als Hartmetallkörper 2 auch anders ausgebildete Hartmetallteile, beispielsweise Schneidplatten und dergleichen Verwendung finden.

Der Hartmetallkörper 2 ist so in die duktile Zone 3 eines zweiten Werkstoffes eingebettet, daß nur der obere den Arbeitsbereich darstellende Teil des Hartmetallkörpers 2 aus der Zone 3 herausragt. Die Zone 3 besteht erfindungsgemäß aus einer duktilen Legierung mit kleinem thermischen Ausdehnungskoeffizienten, um die im Verbund von Hartmetallkörper 2, duktiler Zone 3 und Grundkörper 4 auftretenden Spannungen aufzufangen und möglichst gering zu halten. Als bekannter Werkstoff kommt dafür beispielsweise eine austenitische Eisen-Nickel-Legierung mit 36 % Nickel in Frage.

Erfindungsgemäß kann die duktile Zone 3 aus Pulver einer solchen Legierung hergestellt werden. Der die duktile Zone 3 ummantelnde Grundkörper 4 ist in bevorzugter Weise aus einem hochfesten, vergütbaren Stahl hergestellt. Ihm obliegt es, die mechanische Befestigung des Walzringes zur Übertragung des Drehmomentes sicherzustellen. Dazu können je nach Aufgabenstellung Nuten, Federn, Keile, Gewinde oder Profile in den Grundkörper 4 eingebracht werden. Außerdem besteht auch die Möglichkeit, Walzring und Antriebswelle durch Schrumpfen miteinander zu verbinden.

Hartmetallkörper 2, duktile Zone 3 und Grundkörper 4 werden durch ein heißisostatisches Pressverfahren zu einem Verbundkörper 1 zusammengefügt. Bei der erfindungsgemäßen Verwendung von Legierungspulver als Einbettwerkstoff für den Hartmetallkörper 2 erfolgt bei dem heißisostatischen Pressen ein Zusammenbacken (Konsolidieren) des Pulvers zu einer duktilen Zone 3, die wiederum heißisostatisch mit dem Hartmetallkörper 2 und dem Grundkörper 4 verbunden, d.h. diffusionsverschweißt wird. Alle Hartmetallsorten können ohne Rücksicht auf Bindephasenanteile und -metalle dem heißisostatischen Pressen unterzogen werden. Dies bietet den Vorteil, daß das Hartmetall verwendungszweckbezogen ausgewählt werden kann.

Durch eine gesteuerte Abkühlung des Verbundkörpers 1 nach dem heißisostatischen Pressen läßt sich der Grundkörper 4, der bevorzugt aus einem hochfesten Vergütungsstahl besteht, auf gewünschte Festigkeit von 800 bis 1400 N/mm² vergüten. Als vorteilhaft erweist sich, daß im gleichen Arbeitsgang auch der Abbau von Wärme- und Umwandlungsspannungen erreicht wird, so daß ein Verbundkörper 1 vorliegt, der aufgrund der erfindungsgemäßen aufeinander abgestimmten Werkstoffe einen spannungsarmen Zustand aufweist und darüber hinaus die bedeutsame Eigenschaft hat, während des Einsatzes des Verbundkörpers 1 auftretende Spannungen niedrig zu halten bzw. abzubauen. Dies vermindert seine Bruchempfindlichkeit ganz wesentlich. Durch diese Merkmale unterscheidet sich der erfindungsgemäße Verbundkörper 1 wesentlich von anderen bereits vorhandenen Verbundkörpern.

## Patentansprüche

1. Verbundkörper, bestehend aus Werkstoffen unterschiedlicher thermischer und mechanischer Eigenschaften, **dadurch gekennzeichnet,** daß der Verbundkörper (1) einen aus Stahl bestehenden Grundkörper (4) und einen hochverschleißfesten Hartmetallkörper (2) aufweist, daß sich zwischen dem Grundkörper (4) und dem Hartmetallkörper (2) Pulver einer duktilen Legierung mit kleinem thermischen Ausdehnungskoeffizient befindet und daß durch heißisostatisches Pressen sowohl das Pulver konsolidiert sowie Grundkörper (4), konsolidiertes Pulver und Hartmetallkörper (2) diffusionsverschweißt sind.

2. Verbundkörper nach Anspruch 1, **dadurch gekennzeichnet,** daß als Legierung für das Pulver hochlegierte austenitische Nickelstähle vorgesehen sind.

3. Verbundkörper nach Anspruch 2, **dadurch gekennzeichnet,** daß als Legierung für das Pulver eine austenitische Eisen-Nickel-Legierung mit 36 % Nickel vorgesehen ist.

4. Verbundkörper nach Anspruch 1, 2 oder 3, **dadurch gekennzeichnet,** daß der Verbundkörper (1) als Walzring (5) ausgebildet ist.

5. Verbundkörper nach Anspruch 1, 2, 3 oder 4, **dadurch gekennzeichnet,** daß die Festigkeit des Grundkörpers (4) durch gesteuerte Abkühlung nach dem heißisostatischen Pressen gezielt einstellbar ist.
